# EUROPEAN PATENT SPECIFICATION

(11) **EP 0 353 897 B1**
(45) Date of publication and mention of the grant of the patent: **08.06.1994**
(21) Application number: 89307218.1
(22) Date of filing: 17.07.1989
(51) Int. Cl.: G11B 21/08, G11B 5/55

(54) **Control system for a disk drive head**
Kontrollsystem für einen Plattenantriebskopf
Système de commande de tête d'unité à disques

(30) Priority: 01.08.1988 US 226891
(43) Date of publication of application: 07.02.1990
(73) Proprietor: SEAGATE TECHNOLOGY INTERNATIONAL, Georgetown, Grand Cayman Island (KY)
(72) Inventor: Volz, LeRoy Allen, Northridge California 91326 (US); Nassimov, Haim, West Hills California 91307 (US)
(74) Representative: Sturt, Clifford Mark

(56) References cited:
- EP-A- 0 181 436
- EP-A- 0 184 500
- EP-A- 0 193 961
- EP-A- 0 236 195
- EP-A- 0 270 357
- US-A- 4 381 526
- US-A- 4 591 933
- US-A- 4 636 883
- IBM Technical Disclosure Bulletin vol. 23, no. 7B, December 1980, pages 3341 -3343; D. E. Brownback et al.: "Proportional access profile anticipate circuit"

## Description

This invention relates to a control system for use in a disk drive unit for controlling the movement of a disk drive head during track seeking.

In recent years, micro-computers, such as personal or desk top computers, have become extremely popular for a wide range of business, educational, recreational and other uses. Such computers typically include a main central processor having one or more memory storage disks for the storage of data. The storage disk or disks commonly provided as part of a so called Winchester disk drive unit, sometimes referred to as a "hard" disk or "hard" disks, are rotatably supported within a substantially sealed housing so as to be driven in unison by a small spindle motor, and one or more electro-magnetic heads are arranged to be displaced by a head actuator assembly to traverse a surface of the or each disk for the purposes of reading and writing data. Such data is recorded onto a magnetisable surface or surface film of the or each disk in the form of data bits located within narrow, closely spaced concentric tracks on the disk. Accordingly, for any given disk drive unit the total memory storage capacity is directly proportional both to the number of disks and to the number of tracks on each disk.

In normal operation, a system controller of the main central processor can identify data stored on the disk(s) typically through the use of directory name, file name, and/or track address information. When the reading of at a specified data track is desired, the system controller displaces the head or heads to the desired position by supplying appropriate command signals to operate the head actuator assembly. Alternatively, when data recording or writing is desired, the system controller operates the actuator assembly to align a selected head with a vacant data track. In either case, the head actuator assembly is commanded to displace the or each head through a generally radial path relative to the disk, from alignment with a previously selected track to alignment with the newly selected destination track. Such movement of the head is normally referred to as a "seek" step.

For optimum disk drive unit performance, it is desirable to displace the head or heads through each seek step in a minimum time period consistent with accurate head alignment with the destination track. Otherwise stated, it is desirable to displace the head from one track to another at the fastest possible speed, including the fastest possible acceleration and deceleration, without incurring a seek error. However, the selection of a specific velocity profile during a seek step requires consideration of a wide range of electrical and mechanical design factors, some of which are subject to significant variation over time and/or from one computer to another. For example, temperature, mechanical stiffness of the actuator assembly, power supply voltage, etc. are subject to variation which can affect the optimum seek velocity profile in order to avoid errors. In the past, these design factors have been accommodated by selecting a seek velocity profile in accordance with a worst case condition, thereby minimising or avoiding seek errors. Unfortunately, this approach results in a failure to utilise an optimised velocity profile for achieving minimum seek times during most normal operating conditions. There exists, therefore, a significant need for a relatively simple yet effective system for selecting a substantially optimised seek velocity profile in accordance with variable operating conditions of a disk drive unit.

A known control system and method can be found in US-A-4591933 against which claims 1 and 5 are delimited.

In accordance with the present invention, there is provided a control system for use in a disk drive unit for controlling movement of a disk drive head during seeking of a selected track on an associated memory storage disk, comprising control means for operating an actuator for moving the head in a track seeking step wherein the head accelerates with a commanded acceleration velocity profile from a first position aligned with a first track (X) on the memory storage disk and decelerates with a selected one of a plurality of deceleration velocity profiles to a second position aligned with the selected track (Y), and means for selecting a respective one of the plurality of deceleration velocity profiles for use in at least one subsequent track seeking step, characterised in that the control means monitors the acceleration of the head during the track seeking step, and that the selecting means is responsive to the monitored acceleration so as to select a relatively slow deceleration velocity profile when the monitored acceleration is relatively low and to select a relatively fast deceleration velocity profile when the monitored acceleration is relatively high.

The parameter representing further movement of the head may represent subsequent movement of the head during the same track seeking step and/or movement of the head during a subsequent track seeking step.

Thus, as described below, the invention provides a control system for use in controlling the seek velocity profile of a read/write head in a computer disk drive unit or the like. The disk drive unit includes at least one electromagnetic read/write head which is movably positioned by a head actuator assembly relative to closely spaced tracks on a rotatably driven memory storage disk. The control system monitors and responds to the actual performance of the head in the course of a seek step, as the head is displaced relative to the disk into alignment with a selected destination track, to select a seek velocity profile chosen for minimum seek time without seek error.

In the preferred form of the invention, the control system includes a micro-controller programmed to monitor selected performance parameters as the head is displaced through a seek step, and to respond to those selected parameters to apply one of several deceleration velocity profiles in accordance with current disk drive operating conditions. The selected deceleration velocity profile is utilised during the same and/or one or more subsequent seek steps to control the deceleration of the head as it approaches alignment with the destination track. Advantageously, the system monitors head acceleration at the beginning of each seek step, as well as the occurrence of a seek error at the conclusion of any seek step. When the acceleration level is high without resultant seek error, a rapid deceleration velocity profile is selected for use during the succeeding seek step. However, when the acceleration level is low and/or seek error occurs, a slower deceleration velocity profile is selected.

Also in accordance with the present invention, there is provided a method of controlling movement of a disk drive head in a disk drive unit during seeking of a selected track on an associated memory storage disk wherein the head accelerates with a commanded acceleration velocity profile from a first position aligned with a first track (X) on the memory storage disk and decelerates with a selected one of a plurality of deceleration velocity profiles to a second position aligned with the selected track (Y) on the memory storage disk, characterised by monitoring acceleration of the head in the said track seeking step, and responding to the monitored acceleration by selecting a respective one of the plurality of deceleration velocity profiles for use in at least one subsequent track seeking step, the selecting step comprising selecting a relatively fast deceleration velocity profile when the monitored acceleration is relatively high and selecting a relatively slow deceleration velocity profile when the monitored acceleration is relatively low.

The invention will be described further, by way of example, with reference to the accompanying drawings, in which:-
Figure 1 is a schematic diagram of a computer disk drive unit illustrating a typical memory storage disk in association with a head for use in reading and/or writing data;
Figure 2 is an enlarged schematic representation illustrating head position relative to multiple tracks on the disk when a conventional quadrature track configuration is used, for example;
Figure 3 is a graphic representation depicting a exemplary velocity profile for the head during a seek step moving between tracks designated as "X" and "Y";
Figure 4 is an enlarged graphic representation showing alternative selection of multiple deceleration velocity profiles at the conclusion of a seek step, in accordance with the invention;
Figure 5 is a flow chart illustrating a typical seek step in accordance with the invention; and
Figure 6 is a flow chart illustrating a post seek sub-routine for selecting, in response to parameters monitored during a seek step, one of the deceleration velocity profiles for use during a subsequent seek step.

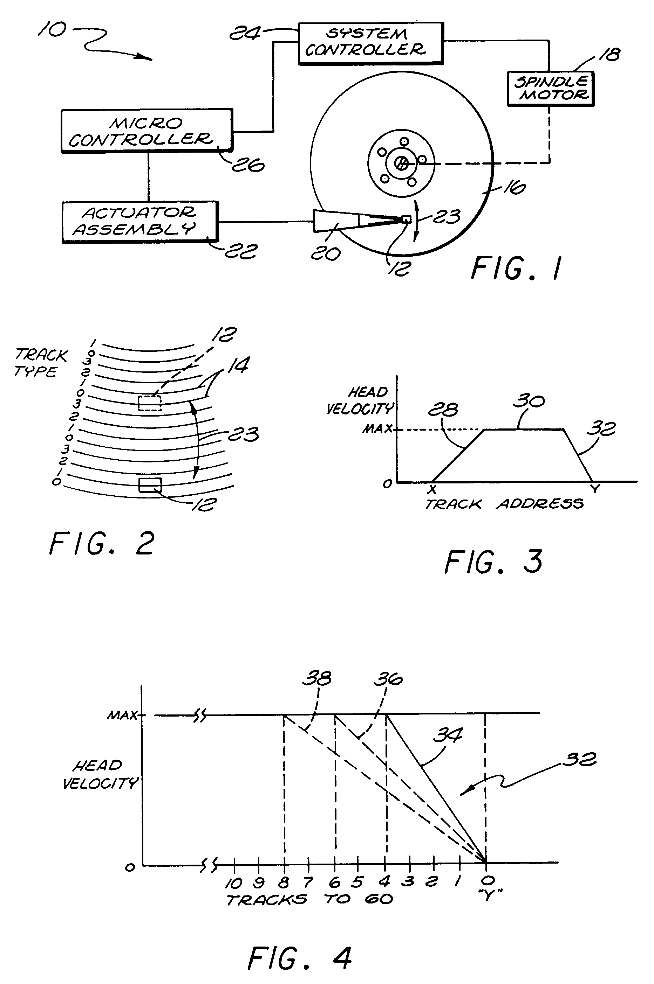

As shown in the drawings, a computer disk drive unit, generally designated 10 in Figure 1, of the type used in a micro-computer, such as a personal or desk top computer or the like, includes an adaptive velocity profile control system for variably controlling movement of an electro-magnetic head 12 with respect to closely spaced annular tracks or cylinders 14 (Figure 2) on a memory storage disk 16. The adaptive control system is responsive to current operational parameters of the disk drive unit to select from an available group of velocity profiles to achieve a minimum duration for the movement of the head without substantial error introduction.

As shown schematically in Figure 1, the computer disk drive unit 10 includes at least one memory storage disk 16 mounted for rotation about a central axis thereof in response to operation of a spindle motor 18. The disk includes a magnetisable surface or surface film on at least one side and preferably on both sides thereof for the recording and storage of data bits within the closely spaced tracks 14. The electro-magnetic head 12 is carried by an arm 20 of a head actuator assembly 22 in close proximity with the disk surface for the purposes of reading and writing data. During normal operation of the disk drive unit 10, the actuator assembly 22 repeatedly displaces the head 12 through radial traverses or seek steps, as indicated by arrow 23 in Figures 1 and 2 and as is known in the art, to align the head 12 with a selected one of the disk tracks 14. A main system controller 24 of the computer signals a micro-controller 26 of the disk drive unit 10 to operate the actuator assembly 22 in order to position the head 12 in alignment with a selected disk track.

While Figure 1 illustrates the basic components of a typical disk drive unit 10 for use in a personal computer or the like, it will be understood that multiple memory storage disks 16 may be mounted in a common stack for rotation in unison by means of the single spindle motor 18, and further that multiple read/write heads 12 may be provided on separate arms 20 of a multi-armed actuator assembly 22 for positioning the various heads in close relation with respective upper and lower surfaces of the multiple disks 16. In such a multi-disk disk drive construction, the various heads 12 are displaced radially relative to the multiple disks in unison, with the main system controller 24 designating one of the heads to be operational at any given time for the purposes of reading and/or writing data. An exemplary multiple disk, multiple head disk drive construction is described in more detail in European Application No. 89301684.0 and in European Application No. 89301685.7. The use of a multiple disk, multiple head disk drive unit is, of course, frequently desirable due to the increased overall disk surface area and correspondingly increased data storage capacity.

In a typical multi-disk disk drive unit, one disk surface comprises a servo surface bearing pre-recorded servo data arranged in closely spaced tracks. This servo data is monitored by the associated head 12 to provide appropriate feedback signals to micro-controller servo circuits (not shown) for operating the actuator assembly 22 in a manner maintaining the head 12 in generally centered alignment with a specific servo track. Such alignment of the servo head 12 functions to position the remaining heads in a similar centered alignment with corresponding data tracks on the associated disk surfaces. In this regard, as viewed generally in Figure 2, one common arrangement for the servo data utilises a so called quadrature servo track configuration wherein servo data is recorded in patterns in repeating groups of four tracks across the radial span of the disk surface. Each track group defines four recognisably different track types which are conventionally designated as track types "O", "1", "2" and "3" (Figure 2). As is known in the art, the servo system recognises changes in track type as the head 12 is displaced through a seek step from one track to another to count track crossings, thereby monitoring the magnitude of the head displacement. A more detailed description of a servo system and related quadrature servo track configuration designed to permit servo system recognition of each track by unique track address data is contained in European Application No. 89302294.7.

The present invention is designed to obtain the fastest possible seek time for the head or heads 12 in the course of movement through a seek step from alignment with a prior track to alignment with a different or destination track on the associated surface of the respective storage disk 16. The velocity profile is selected from among a plurality of different velocity profiles to optimise the average seek time to a new track, consistent with a range of operating parameters which may vary from one computer to another, or with respect to the same computer over a period of time. The control system thus automatically reduces track seek time during favourable operating conditions, and increases track seek time during unfavourable operating conditions, in a manner designed to provide the shortest possible seek time consistent with the avoidance of seek errors.

Figure 3 represents in graphic form an exemplary velocity profile for the head 12 in the course of a seek step involving head displacement from alignment with a prior track "X" to alignment with a new destination track "Y". As shown, when a seek step is desired, the micro-controller 26 appropriately signals the head actuator assembly 22 to displace the head 12 in a selected direction for alignment with the destination track "Y". In this regard, other than during initial calibration when the computer is turned on, the micro-controller is normally responding to commands from the main system controller 24. The direction and magnitude of head displacement will depend, of course, upon the relative locations of the tracks "X" and "Y", assuming a typical storage disk 16 having a diameter of 8.89 cm (3.5 inches) and about 1,000 to 1,500 tracks. Generally, the head 12 is initially accelerated with increasing velocity away from the track "X" through an acceleration phase 28 (Figure 3) to a maximum velocity phase 30, followed by an appropriate deceleration phase 32 during which the head velocity is reduced as the head approaches, and stops in centered alignment with, the destination track "Y". However, for relatively short seek steps, the head may not reach the maximum velocity phase 30 before deceleration is initiated.

In general terms, the control system of the present invention monitors parameters representative of head performance during each seek step to select one of several deceleration velocity profiles as shown graphically in Figure 4. More particularly, the control system regulates the deceleration phase of the seek step in accordance with variable operating conditions which are represented by head performance during other phases of the seek step. The present embodiment of the invention provides three different deceleration velocity profiles, namely fast, medium and slow deceleration profiles 34, 36 and 38 as shown in Figure 4 and in each case deceleration following the maximum head velocity phase 30 commences at different track distances from the destination track "Y". For example, in accordance with the fast profile 34, the head decelerates rapidly when it reaches a position of four tracks from the destination track "Y". In accordance with the medium and slow profiles 36 and 38, the head decelerates more slowly beginning at positions of six and eight tracks, respectively, from the destination track "Y". For favourable operating conditions, the fast profile 34 is selected to achieve the shortest average seek time.

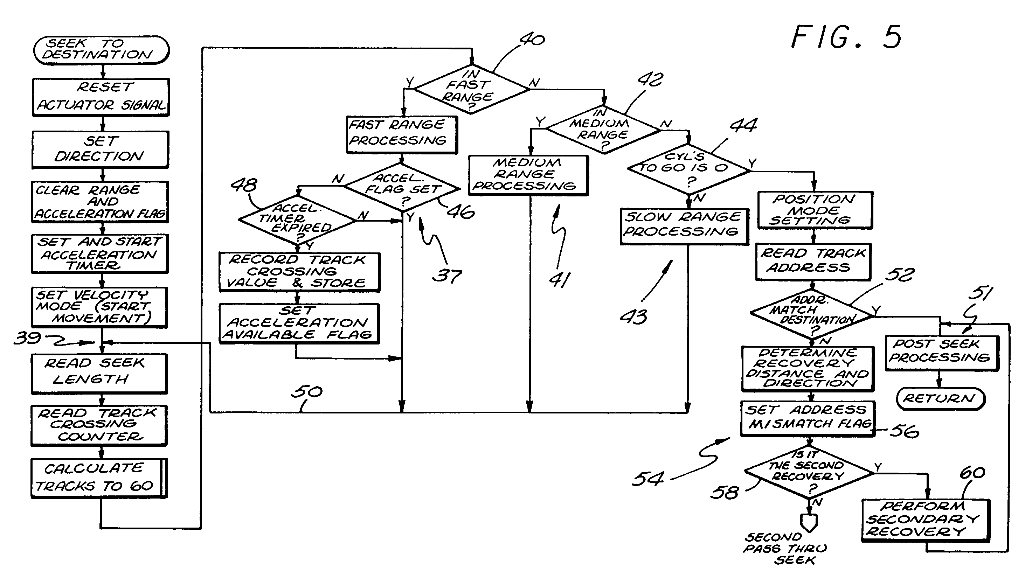

Figure 5 illustrates in the form of a flow chart a preferred process sequence programmed into the micro-controller 26 for regulating head displacement during a seek step. More particularly, at the initiation of a seek step, the micro-controller 26 re-sets its output signal to the head actuator assembly 22 for commanding the actuator assembly to accelerate the head 12 from its current position (track "X" in Figure 3). The micro-controller sets the movement direction, radially inward or outward, depending upon the location of the destination track "Y" relative to the track "X". As further preliminary steps, the micro-controller clears any range or speed setting, as will be described in more detail below, and clears an acceleration flag. An acceleration timer is also re-set and is started simultaneously with initiation of the head movement through the commanded seek step. At the initiation of the head movement, by operation of the actuator assembly, the program enters a primary loop 39 which controls and monitors head performance throughout the seek step.

As the head 12 is displaced by the actuator assembly 22 through the seek step, the micro-controller 26 reads the seek length by interpretation of the destination track identity as commanded by the main system controller 24. The number of track crossings is also read and monitored, by conventional monitoring of the head movement relative to the third quadrature servo tracks as previously described, and the number of "tracks to go", namely the number of tracks remaining before the destination track is reached, is determined.

Based on the foregoing determination of the tracks to go before the destination track is reached, the micro-controller selects one of several sub-loops to control head displacement according to different processing speed ranges. For example, in general terms, when the seek step is relatively long and the number of tracks to go is relatively large (e.g. more than 200), a fast range processing sub-loop 37 is utilised to accelerate the head as fast as possible to the maximum possible velocity (Figure 3) by appropriate control of the micro-controller output to the actuator assembly 22. In the fast range processing sub-loop 37, the performance of the actuator assembly 22 and the head 12 during the acceleration phase 28 is monitored for use in later selection of a deceleration phase velocity profile. As the head approaches the destination track "Y", the micro-controller switches to a medium range processing sub-loop 41 and then to a slow range processing sub-loop 43 for improved head displacement control, for example, in accordance with different velocity tables programmed into the micro-controller 26 and/or different sampling rates for monitoring the number of tracks to go. Alternatively, for relatively short length seek steps, the micro-controller may omit the fast range processing sequence and instead go directly to the medium or slow range processing sub-loops. In either case, the general programming and functional operation of the various speed range processing sub-loops is known in the art and thus is not described in further detail herein.

More specifically, with reference to Figure 5, at decision block 40, the micro-controller 26 responds to the number of tracks to go before the head 12 reaches the destination track to apply the appropriate processing speed sub-loop. In one illustrative example, the decision block 40 will select the fast range processing sub-loop when the number of tracks to go exceeds a selected threshold, such as 200. However, if the number of tracks to go is less than the selected threshold, a second decision block 42 determines whether to apply the medium range processing, such as when the number of tracks to go ranges from about 8 to 200. Finally, when the number of tracks to go is less than the number applicable to the medium range processing sub-loop, a third decision block 44 functions to apply the slow range processing until the destination track "Y" is reached.

When the number of tracks to go is large, the fast range processing is applied to accelerate the head with maximum acceleration to the maximum design velocity, as previously described. At decision block 46, the micro-controller determines whether the acceleration flag has been set; upon the initial pass, the acceleration flag is not set due to the clearing thereof preliminary to head displacement. A timer decision block 48 then determines whether the acceleration timer has reached a pre-set termination point, such as about 3 milli-seconds. If the timer has not reached the termination point, the program returns to the beginning of the primary loop 39, as indicated by line 50 for a subsequent pass including re-determination of the number of tracks to go to the destination track. Alternatively, when the timer has expired, the timer decision block 48 is followed by a reading and recording in memory of the number of track crossings which have occurred during the timer period and the acceleration flag is set, followed in turn by a second pass through the primary loop.

The stored number of track crossings during the timer period represents in digital form the acceleration of the head during the acceleration phase of the seek step, and thereby also represents the acceleration performance of the head during that particular seek step. Such acceleration performance can be affected by a number of potentially variable conditions, such as temperature, mechanical stiffness of the actuator assembly, electrical variation for example in power supply voltage, etc. During ideal or favourable operating conditions, the acceleration level as indicated by the digital record will be high, with a corresponding rapid seek time due to the high acceleration.

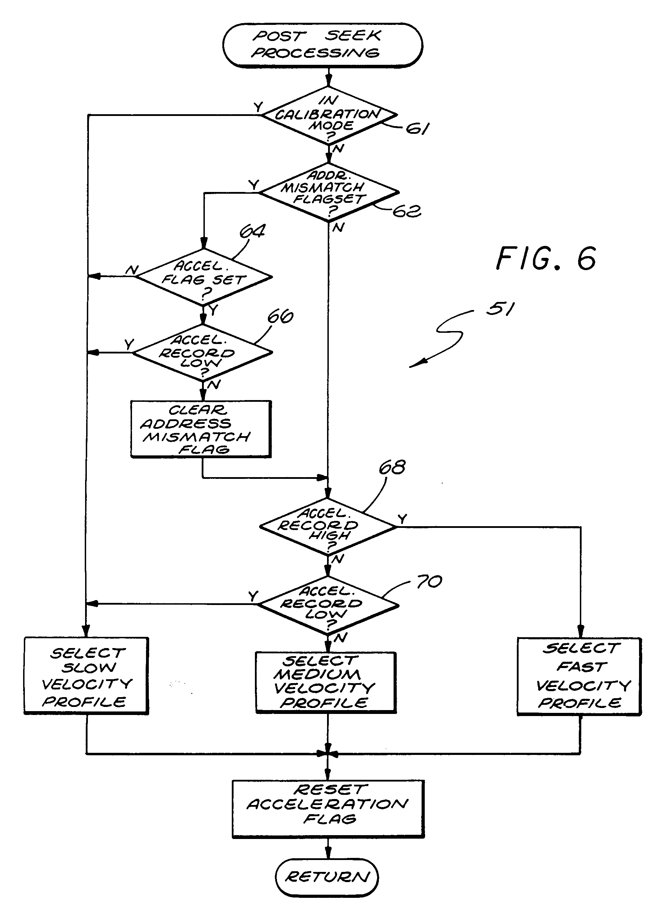

Alternatively, when the number of tracks to go is less than the number required to enter the fast range processing sub-loop 37, the medium or slow range processing sub-loops are initiated, as appropriate. Once again, the slower range processing sub-loops will be utilised at the conclusion of a long seek step due to repeated passes through the primary loop as the number of tracks to go continuously diminishes, or in a short seek step of insufficient length to initiate the fast range processing sub-loop. Eventually, when the number of tracks to go reaches zero to indicate head alignment with the destination track "Y", the third decision block 44 switches the micro-controller from the velocity mode for head displacement to a position mode. In the position mode, the micro-controller confirms head alignment with the designated destination track and performs a post seek processing sub-routine 51 (Figure 6) to select a deceleration velocity profile for use during one or more subsequent seek steps.

More specifically, with continued reference to Figure 5, the micro-controller in the position mode reads the address of the track actually aligned with the head 12. A preferred servo system permitting the specific track address to be read by unique address data is described in the above mentioned European Application No. 89302294.7. The track address associated with the actual head position is then compared at decision block 52 with the address of the desired destination track "Y". In virtually all conditions of operation, the addresses will match to indicate the absence of a seek error, whereupon the post seek processing sub-routine 51 of Figure 6 will be initiated. However, in the event of address mis-match indicating a seek error, the decision block 52 initiates an error recovery sub-loop 54 to move the head into alignment with the desired destination track.

In a preferred error recovery method, the micro-controller 26 initially analyses the actual and desired track addresses to determine the magnitude and direction of the error. An address mis-match flag 56 is then set, and the primary seek program is re-entered as if performing a subsequent seek step, all as previously described. When the head is re-positioned, the position mode of the program is re-entered. If a seek error still exists, the error recovery sub-loop 54 is re-entered for a second pass. A decision block 58 identifies the second pass to initiate a secondary recovery process 60 wherein, in the preferred form, the head is indexed one track at a time until alignment with the desired destination track is obtained. When such proper head alignment is achieved, the post seek processing sub-routine 51 is initiated.

As shown in Figure 6, the post seek processing sub-routine includes an initial decision block 61 for determining whether the disk drive unit is operating in a normal mode for the reading or writing of data, or in a calibration mode upon initial power up of the computer system. More specifically, when the computer system is turned on, a pre-programmed calibration sequence is followed which includes the performance of several seek steps by the disk drive unit to verify proper unit operations. In the calibration mode, seek times for the various seek steps are not critical, and extremely high head accelerations or velocities are not desirable due to potential conditions adverse to such high accelerations or velocities. Accordingly, the slow range processing is pre-programmed to select the slow deceleration velocity profile 38 (Figure 4) for the first seek step during the calibration mode. For subsequent seeks steps during the calibration mode, the decision block 61 (Figure 6) responds to the calibration operation to select the slow deceleration velocity profile 38 for the slow range processing sequence, followed by clearing of the acceleration flag and exit from the sub-routine to await the next seek step.

However, when the disk drive unit is in the normal mode of operation, a subsequent decision block 62 determines whether the address mis-match flag 56 has been set. If the address mis-match flag 56 is set, the program routes to another decision block 64 which determines whether the acceleration flag has been set to indicate the presence of an acceleration record stored in memory. Such acceleration record, of course, is stored whenever the seek length is sufficiently long to permit the acceleration timer to expire in the course of the fast range processing sub-loop (Figure 5). If the acceleration flag is not set, the slow deceleration velocity profile 38 is again selected due to insufficient information regarding current head acceleration performance, and the sub-routine 51 is exited as before.

Alternatively, when an acceleration flag is set, the decision block 64 then routes the program to decision block 66 for reading and responding to the magnitude of the acceleration record. More particularly, the decision block 66 determines whether the acceleration record is below a predetermined minimum threshold, such as below about 50 track counts within the acceleration timer period of about 3 milli-seconds. When the acceleration record is low to indicate potentially unfavourable current operating conditions, the decision block 66 again routes the sub-routine to select the slow deceleration velocity profile 38 prior to exiting the sub-routine. However, if the acceleration record is above the minimum threshold, the decision block 66 routes the sub-routine to clear the address mis-match flag 56 and to a subsequent decision block 68 for determining if the acceleration record is above a predetermined high threshold, such as above about 65 track counts during the timer period. When the acceleration is above the high threshold, the sub-routine selects the fast deceleration velocity profile 34 prior to sub-routine exit. Or, if the acceleration is below the high threshold, the sub-routine selects the medium deceleration velocity profile 36 before exit.

When there is no address mis-match during normal operation of the disk drive unit, as determined by the decision block 62, the sub-routine is routed directly to the decision block 68 which determines if the acceleration record is above the predetermined high threshold. If the acceleration record is not above the high threshold, the decision block 68 routes the program to another decision block 70 which determines if the record is below the minimum threshold, as previously described relative to the decision block 66. If the acceleration record is below the low threshold, the decision block 70 routes the program to select the slow deceleration velocity profile 38. Alternatively, if the acceleration record is above the low threshold, the program selects the medium deceleration velocity profile 36.

However, if the acceleration record exceeds the high threshold, the decision block 68 causes the sub-routine to select the fast deceleration velocity profile 34. In any case, after velocity profile selection, the acceleration flag is cleared followed by exit from the sub-routine 51 to await the next seek step.

The selected deceleration velocity profile is applied to the medium and slow range processing sub-loops 41 and 43 (Figure 5) to control head deceleration during subsequent seek step performed by the disk drive unit. Accordingly, the deceleration velocity profile and thus the overall seek time for any given seek step is effectively regulated to accommodate current operating conditions of the system. When operating conditions are favourable, the fast deceleration velocity profile is selected for achieving minimum seek times without seek error. However, when conditions are relatively unfavourable, the seek times are proportionally increased by the selection of the medium or slow deceleration velocity profile to provide the fastest possible seek times without seek errors. A particular deceleration velocity profile programmed into the medium and slow range processing sub-loops will remain until a different velocity profile is selected as will occur, for example, when a relatively long seek step achieves a high level acceleration for appropriate response during the post seek processing sub-routine applicable to that seek step.

Accordingly, the adaptive velocity profile control of the present invention provides a simple and automatic system for variable selection of different head velocity profiles during seek steps, in accordance with current operating conditions of the disk drive unit. The control system operates the head for minimum seek times during favourable operating conditions, but adjusts the relative seek times during unfavourable conditions to obtain the best disk drive performance consistent with operating conditions.

A variety of modifications and improvements to the adaptive control system of the present invention will be apparent to those skilled in the art. For example, while selection from among three different velocity profiles is shown and described, it will be understood that any selected number of appropriate velocity profiles may be utilised.

## Claims

1. A control system for use in a disk drive unit (10) for controlling movement of a disk drive head (12) during seeking of a selected track (14) on an associated memory storage disk (16), comprising control means (26) for operating an actuator (22) for moving the head in a track seeking step wherein the head accelerates with a commanded acceleration velocity profile from a first position aligned with a first track (X) on the memory storage disk and decelerates with a selected one of a plurality of deceleration velocity profiles to a second position aligned with the selected track (Y), and means (26) for selecting a respective one of the plurality of deceleration velocity profiles for use in at least one subsequent track seeking step, characterised in that the control means monitors the acceleration of the head during the track seeking step, and that the selecting means is responsive to the monitored acceleration so as to select a relatively slow deceleration velocity profile when the monitored acceleration is relatively low and to select a relatively fast deceleration velocity profile when the monitored acceleration is relatively high.

2. A system according to claim 1, characterised in that the selecting means include means for detecting an occurrence of an address mis-match between an actual position of the head at the conclusion of a track seeking step and the second position, the selecting means being arranged in response to such an address mis-match to select a relatively slow deceleration velocity profile.

3. A system according to claim 1 or 2 characterised in that the selecting means includes means for sensing operation of the disk drive unit in a calibration mode, the selecting means being arranged in response to the calibration mode to select a relatively slow deceleration velocity profile.

4. A system according to any of claims 1 to 3 characterised in that the control means are arranged to monitor the acceleration of the head during each track seeking step having a pre-determined minimum seek length, and in that the selecting means are arranged to select a respective one of the plurality of deceleration velocity profiles at the conclusion of each track seeking step having the pre-determined minimum seek length.

5. A method of controlling movement of a disk drive head (12) in a disk drive unit (10) during seeking of a selected track (14) on an associate memory storage disk (16) wherein the head accelerates with a commanded acceleration velocity profile from a first position aligned with a first track (X) on the memory storage disk and decelerates with a selected one of a plurality of deceleration velocity profiles to a second position aligned with the selected track (Y) on the memory storage disk, characterised by monitoring acceleration of the head in the said track seeking step, and responding to the monitored acceleration by selecting a respective one of the plurality of deceleration velocity profiles for use in at least one subsequent track seeking step, the selecting step comprising selecting a relatively fast deceleration velocity profile when the monitored acceleration is relatively high and selecting a relatively slow deceleration velocity profile when the monitored acceleration is relatively low.

6. A method according to claim 5 characterised by detecting an occurrence of an address mis-match between the actual position of the head at the conclusion of the track seeking step and the second position, and responding to the address mis-match by selecting a relatively slow deceleration velocity profile.

7. A method according to claim 5 or 6 characterised by sensing operation of the disk drive unit in a calibration mode, and responding to the calibration mode by selecting a relatively slow deceleration velocity profile.

8. A method according to any of claims 5 to 7 characterised in that the monitoring step takes place during each track seeking step of a pre-determined minimum seek length and in that the selecting step takes place at the conclusion of each track seeking step of the pre-determined minimum seek length.

## Patentansprüche

1. Steuersystem zur Verwendung in einer Plattenlaufwerk-Einheit (10) zur Steuerung der Bewegung eines Plattenlaufwerk-Kopfes (12) während des Suchens einer ausgewählten Spur (14) auf einer zugehörigen Speicherplatte (16), mit einer Steuereinrichtung (26) zur Betätigung eines Stellgliedes (22) zur Bewegung des Kopfes in einem Spursuchschritt, in dem der Kopf mit einem Befehls-Beschleunigungs-Geschwindigkeitsprofil von einer ersten, mit einer ersten Spur (X) auf der Speicherplatte ausgerichteten Position fort beschleunigt und mit einem ausgewählten einer Vielzahl von Abbrems-Geschwindigkeitsprofilen auf eine zweite Position abgebremst wird, die mit der ausgewählten Spur (Y) ausgerichtet ist, und mit einer Einrichtung (26) zur Auswahl eines jeweiligen der Vielzahl von Abbrems-Geschwindigkeitsprofilen zur Verwendung in zumindestens einem nachfolgenden Spursuchschritt, dadurch gekennzeichnet, daß die Steuereinrichtung die Beschleunigung des Kopfes während des Spursuchschrittes überwacht, und daß die Auswahleinrichtung auf die überwachte Beschleunigung derart anspricht, daß ein relativ langsames Abbrems-Geschwindigkeitsprofil ausgewählt wird, wenn die überwachte Beschleunigung relativ niedrig ist, während ein relativ schnelles Abbrems-Geschwindigkeitsprofil ausgewählt wird, wenn die überwachte Beschleunigung relativ hoch ist.

2. System nach Anspruch 1,
dadurch gekennzeichnet, daß die Auswahleinrichtungen Einrichtungen zur Feststellung des Auftretens einer fehlenden Adressenübereinstimmung zwischen einer tatsächlichen Position des Kopfes am Ende des Spursuchschrittes und der zweiten Position einschließen, und daß die Auswahleinrichtungen derart ausgebildet sind, daß sie als Antwort auf eine derartige fehlende Adressenübereinstimmung ein relativ langsames Abbrems-Geschwindigkeitsprofil auswählen.

3. System nach Anspruch 1 oder 2,
dadurch gekennzeichnet, daß die Auswahleinrichtungen Einrichtungen zur Messung des Betriebs der Plattenlaufwerk-Einheit in einer Eich-Betriebsart einschließen und daß die Auswahleinrichtung so ausgebildet ist, daß sie bei der Eich-Betriebsart ein relativ langsames Abbrems-Geschwindigkeitsprofil auswählt.

4. System nach einem der Ansprüche 1 bis 3,
dadurch gekennzeichnet, daß die Steuereinrichtungen so ausgebildet sind, daß sie die Beschleunigung des Kopfes während jedes Spursuchschrittes mit einer vorgegebenen minimalen Suchlänge überwachen, und daß die Auswahleinrichtungen so ausgebildet sind, daß sie ein jeweiliges der Vielzahl der Abbrems-Geschwindigkeitsprofile am Ende jedes Spursuchschrittes auswählen, der die vorgegebenen minimale Suchlänge aufweist.

5. Verfahren zur Steuerung der Bewegung eines Plattenlaufwerk-Kopfes (12) in einer Plattenlaufwerk-Einheit (10) während des Suchens einer ausgewählten Spur (14) auf einer zugehörigen Speicherplatte (16), bei dem der Kopf mit einem Befehls-Beschleunigungs-Geschwindigkeitsprofil von einer ersten, mit einer ersten Spur (X) auf der Speicherplatte ausgerichteten Position fort beschleunigt und mit einem ausgewählten einer Vielzahl von Abbrems-Geschwindigkeitsprofilen auf eine zweite Position abgebremst wird, die mit der ausgewählten Spur (Y) auf der Speicherplatte ausgerichtet ist,
dadurch gekennzeichnet, daß die Beschleunigung des Kopfes in dem Spursuchschritt überwacht wird und ein Ansprechen auf die überwachte Beschleunigung derart bewirkt wird, daß ein jeweiligen einer Vielzahl von Abbrems-Geschwindigkeitsprofilen zur Verwendung in zumindestens einem nachfolgenden Spursuchschritt ausgewählt wird, wobei der Auswahlschritt die Auswahl eines relativ schnellen Abbrems-Geschwindigkeitsprofils umfaßt, wenn die überwachte Beschleunigung relativ hoch ist, während ein relativ langsames Abbrems-Geschwindigkeitsprofil ausgewählt wird, wenn die überwachte Beschleunigung relativ niedrig ist.

6. Verfahren nach Anspruch 5,
dadurch gekennzeichnet, daß das Auftreten einer fehlenden Adressenübereinstimmung zwischen der tatsächlichen Position des Kopfes am Ende des Spursuchschrittes und der zweiten Position festgestellt wird und auf die fehlende Adressenübereinstimmung durch Auswahl eines relativ langsamen Abbrems-Geschwindigkeitsprofils angesprochen wird.

7. Verfahren nach Anspruch 5 oder 6,
gekennzeichnet durch die Feststellung des Betriebes der Plattenlaufwerk-Einheit in einer Eich-Betriebsart und das Ansprechen auf die Eich-Betriebsart durch Auswahl eines relativ langsamen Abbrems-Geschwindigkeitsprofils.

8. Verfahren nach einem der Ansprüche 5 - 7,
dadurch gekennzeichnet, daß der Überwachungsschritt während jedes Spursuchschrittes mit einer vorgegebenen minimalen Suchlänge erfolgt, und daß der Auswahlschritt am Ende jedes Spursuchschrittes mit der vorgegebenen minimalen Suchlänge erfolgt.

## Revendications

1. Système de commande à utiliser dans une unité de disque (10) pour commander le mouvement d'une tête (12) d'unité de disque au cours de la recherche d'une piste sélectionnée (14) sur un disque associé de la mémoire (16), comprenant des moyens de commande (26) pour agir sur un actionneur (22) afin de déplacer la tête au cours de l'opération de recherche d'une piste dans lequel la tête accélère avec un profil d'accélération commandé de vitesse depuis une première position alignée avec une première piste (X) du disque de mémoire et décélère avec un profil sélectionné parmi plusieurs profils de vitesse de décélération jusqu'à une seconde position alignée avec la piste sélectionnée (Y), et des moyens (26) pour sélectionner un profil particulier parmi une pluralité de profils de vitesse de décélération pour l'utiliser au cours d'au moins une opération ultérieure de recherche de piste, caractérisé en ce que le moyen de commande surveille l'accélération de la tête pendant l'opération de recherche de la piste et en ce que le moyen de sélection répond à l'accélération surveillée de façon à sélectionner un profil de vitesse de décélération relativement lente lorsque l'accélération surveillée est relativement lente et pour sélectionner un profil de vitesse de décélération relativement rapide quand l'accélération surveillée est relativement élevée.

2. Système selon la revendication 1, caractérisé en ce que le moyen de sélection comprend des moyens pour détecter l'apparition d'un défaut de correspondance d'adresse entre une position réelle de la tête à la fin de l'opération de recherche de piste et la seconde position, les moyens de sélection étant agencés pour sélectionner en réponse à un tel défaut de correspondance d'adresse, un profil de vitesse de décélération relativement lent.

3. Système selon la revendication 1 ou 2, caractérisé en ce que le moyen de sélection comprend un moyen de détection du fonctionnement d'une unité de disque en mode d'étalonnage, le moyen de sélection étant agencé en réponse au mode d'étalonnage pour sélectionner un profil de vitesse de décélération relativement lent.

4. Système selon l'une quelconque des revendications 1 à 3, caractérisé en ce que les moyens de commande sont agencés pour surveiller l'accélération de la tête au cours de chaque opération de recherche de piste ayant une durée de recherche minimale déterminée d'avance, et en ce que les moyens de sélection sont agencés pour sélectionner l'un particulier parmi la pluralité des profils de vitesse de décélération à la fin de chaque opération de recherche de piste ayant la durée de recherche minimale déterminée d'avance.

5. Procédé de commande du mouvement d'une tête (12) d'unité de disque dans une unité de disque (10) au cours de la recherche d'une piste sélectionnée (14) sur un disque (16) de mémoire associé dans lequel la tête accélère avec un profit de vitesse d'accélération commandé depuis une première position alignée avec une première piste (X) du disque de stockage et décélère avec l'un choisi d'une pluralité de profits de vitesse de décélération jusqu'à une seconde position alignée avec la piste sélectionnée (Y) du disque de mémoire, caractérisé par la surveillance de l'accélération de la tête au cours de ladite opération de recherche de piste et par la réponse à l'accélération surveillée en sélectionnant un particulier parmi la pluralité des profits de vitesse de décélération pour l'appliquer au cours d'au moins une opération ultérieure de recherche de piste, l'opération de sélection comprenant la sélection d'un profil de vitesse de décélération relativement rapide lorsque l'accélération surveillée est relativement élevée et la sélection d'un profil de vitesse de décélération relativement lent lorsque l'accélération surveillée est relativement lente.

6. Procédé selon la revendication 5, caractérisé par la détection de l'apparition d'un défaut de correspondance d'adresse entre la position réelle de la tête à la fin de l'opération de recherche de piste et la seconde position, et par la réponse au défaut de correspondance d'adresse en sélectionnant un profil de vitesse de décélération relativement lent.

7. Procédé selon la revendication 5 ou 6, caractérisé par l'opération de détection de l'unité de disque en mode d'étalonnage, et par la réponse au mode d'étalonnage en sélectionnant un profil de vitesse de décélération relativement lent.

8. Procédé selon l'une des revendications 5 à 7, caractérisé en ce que l'opération de surveillance intervient pendant chaque opération de recherche de piste ayant une durée de recherche minimale déterminée d'avance et en ce que l'opération de sélection intervient à la fin de chaque opération de recherche de piste ayant la durée de recherche minimale déterminée d'avance.
